(19) **Europäisches Patentamt**
**European Patent Office**
**Office européen des brevets**

(11) **EP 2 819 398 A1**

(12) **EUROPEAN PATENT APPLICATION**
published in accordance with Art. 153(4) EPC

(43) Date of publication:
**31.12.2014 Bulletin 2015/01**

(51) Int Cl.:
**H04N 5/265** (2006.01)    **H04N 5/232** (2006.01)

(21) Application number: **13751815.5**

(22) Date of filing: **22.01.2013**

(86) International application number:
**PCT/JP2013/051141**

(87) International publication number:
**WO 2013/125277 (29.08.2013 Gazette 2013/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.02.2012   JP 2012034148**

(71) Applicant: **Sony Corporation**
**Tokyo 108-0075 (JP)**

(72) Inventor: **NAKAO, Daisuke**
**Tokyo 108-0075 (JP)**

(74) Representative: **Witte, Weller & Partner**
**Patentanwälte mbB**
**Königstrasse 5**
**70173 Stuttgart (DE)**

(54) **IMAGE PROCESSING DEVICE, IMAGE PROCESSING METHOD, AND PROGRAM**

(57)    Provided is an image processing device including an image selection unit configured to decide a width of a combining target image to be combined with a combining-completed image for each input frame according to subject information, and an image combining unit configured to combine the combining target image having the decided width of the input frame with the combining target image to be parallel with the combining-completed image in a predetermined direction.

**FIG. 1**

**Description**

Technical Field

The technology relates to an image processing device, an image processing method, and a program. Specifically, it relates to easy generation of a motion transition image.

Background Art

In the related art, a motion transition image was automatically generated for the purpose of checking a formation in a sport and the like, as disclosed in, for example, Patent Literature 1. For generation of a motion transition image, consecutive photos are automatically generated, and image joining (stitching) is performed using the generated photos. In addition, by detecting a moving subject portion and performing combining of the moving subject portion as a front side, a motion transition image is generated without deterioration of visibility.

Citation List

Patent Literature

Patent Literature 1: JP 2011-030244A (US Patent Application Publication No. 2010/0039447)

Summary of Invention

Technical Problem

However, in the generation of a motion transition image in the related art, the number of frames to be combined is the number of frames set in advance or the number of frames set by a user, and a combining width is uniformly decided only depending on the number of frames to be combined. For this reason, when a motion transition image is to be generated, it is not easy to generate a desired motion transition image because the optimum number of frames to be combined should be set by predicting a motion of a subject in advance and a photographing distance or zoom magnification should be adjusted so that the subject is included in the combining width.

Thus, the technology aims to provide an image processing device, an image processing method, and a program that enable easy generation of a motion transition image.

Solution to Problem

According to the first aspect of the present invention in order to achieve the above-mentioned object, there is provided an image processing device apparatus including an image selection unit configured to decide a width of a combining target image to be combined with a combining-completed image for each input frame according to a subject recognition result, and an image combining unit configured to combine the combining target image having the decided width of the input frame with the combining target image to be parallel with the combining-completed image in a predetermined direction.

In the technology, a width of a combining target image to be combined with a combining-completed image, for example, a width of at least one of a moving subject layer and a background layer of the input frame, is decided according to a subject recognition result. With regard to the moving subject layer, a width for combining the moving subject layer of the input frame with the combining-completed image is decided based on a width of a moving subject. In addition, a region in which subject information represents a specific state in the moving subject layer is extracted as a region of interest, and the region of interest is decided as a width for combining the background layer of the input frame with the combining-completed image. When the moving subject is a human body, the regional width of the region of interest is decided such that a desired portion of a human body is detected using a human body detection mask and the desired portion is included therein. In addition, with regard to the regional width of the region of interest, the width is decided based on the subject information using a cumulative area mask so that a cumulative area of the moving subject portion has a predetermined ratio.

In addition, according to an image frame size and an image size of an image that has undergone combining, the number of frames of images to be combined is decided. When a key frame is decided from an input frame and the number of frames of the image to be combined is changed according to the image frame size and the image size of the image generated through combining of a combining target image of the key frame, a key frame is decided again according to the changed number of frames. In addition, by setting a region of interest that includes a region of interest of a desired moving subject in the moving subject layer of the combining target image, the regional width of the region of interest is adjusted so that a size of an image generated by performing the combining by joining a region of interest of the combining target image with a region of interest of an image finally combined in the combining-completed image substantially coincides with the image frame size. In the adjustment of the regional width, for example, adjustment of a width of the region of interest is performed to obtain an equally adjusted width or an adjusted width according to the regional width of the region of interest. Furthermore, when the regional width of the region of interest is to be reduced, width adjustment is performed so that more regions of interest of a desired moving subject are left, and when the regional width of the region of interest is to be enlarged, width adjustment is performed so that more regions of interest of the desired moving subject are included therein. Alternatively, when the regional width of the region of interest is to be reduced, an adjustment width of a frame image increases as a frame interval with respect to a key frame of interest is lengthened, and when the regional width of the region of interest is to be enlarged, with adjustment is performed so that an adjustment width of the frame image increases as the key frame of interest or the frame interval with respect to the key frame of interest is shortened.

According to the second aspect of the present invention in order to achieve the above-mentioned object, there is provided an image processing method including a step of deciding a width of a combining target image to be combined with a combining-completed image for each input frame according to a subject recognition result, and a step of combining the decided combining target image of the input frame with the combining target image to be parallel with the combining-completed image in a predetermined direction.

According to the third aspect of the present invention in order to achieve the above-mentioned object, there is provided a program for causing a computer to generate an image indicating motion transition of a subject using an input frame, the program causing the computer to execute a procedure of deciding a width of a combining target image to be combined with a combining-completed image for each input frame according to a subject recognition result, and a procedure of combining the decided combining target image of the input frame with the combining target image to be parallel with the combining-completed image in a predetermined direction.

Note that the program of the present technology is a program that can be provided in, for example, a general-purpose computer that can execute various program codes using a storage medium that is provided in a computer-readable form, a communication medium, for example, a storage medium such as an optical disc, a magnetic disk, or a semiconductor memory, or a communication medium such as a network. By providing such a program in a computer-readable form, a process according to the program is realized on a computer.

Advantageous Effects of Invention

According to the technology, a width of a combining target image to be combined with a combining-completed image is decided for each input frame according to subject information. In addition, the combining target image having the decided width of the input frame is combined with the combining-completed image to be parallel with the combining-completed image in a predetermined direction, and thereby a motion transition image showing motion transition of a subject is generated. For this reason, without performing manipulation of a user to instruct a region that includes the subject for each frame image and a process performed by the user to instruct a position for image joining, extraction and joining of images can be automatically performed according to a state of the subject, and thereby a desired motion transition image can be easily generated.

Brief Description of Drawings

[FIG. 1] FIG. 1 is a diagram illustrating a configuration of a system using an image processing device.
[FIG. 2] FIG. 2 is a diagram illustrating a motion transition still image generated by the image processing device.
[FIG. 3] FIG. 3 is a flowchart showing a first generation operation.
[FIG. 4] FIG. 4 is a diagram illustrating layer separation information.
[FIG. 5] FIG. 5 is a diagram for describing settings of a motion transition effective region and a residual background region (when a human body detection mask is used).
[FIG. 6] FIG. 6 is a diagram for describing settings of the motion transition effective region and the residual background region (when a subject cumulative area mask is used).
[FIG. 7] FIG. 7 is a diagram for describing a case in which the motion transition effective region is set using a threshold value Th.
[FIG. 8] FIG. 8 is a diagram showing the motion transition effective region.
[FIG. 9] FIG. 9 is a diagram for describing computation of the number of combined frames.
[FIG. 10] FIG. 10 is a diagram for describing an operation of a width adjustment section.

[FIG. 11] FIG. 11 is a flowchart showing a second generation operation.

[FIG. 12] FIG. 12 is a diagram illustrating images generated in the second generation operation.

[FIG. 13] FIG. 13 is a diagram for describing another setting method of a combining region.

[FIG. 14] FIG. 14 is a diagram for describing another width adjustment method.

[FIG. 15] FIG. 15 is a diagram for describing still another width adjustment method.

[FIG. 16] FIG. 16 is a diagram illustrating a case in which a combining position and a combining direction are adjusted according to states of a moving subject.

Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Hereinafter, embodiments for implementing the present technology will be described. Note that description will be provided in the following order.

1. Configuration of an image processing device
2. First generation operation for a motion transition image
3. Second generation operation for a motion transition image
4. Other operations of the image processing device

<1. Configuration of an image processing device>

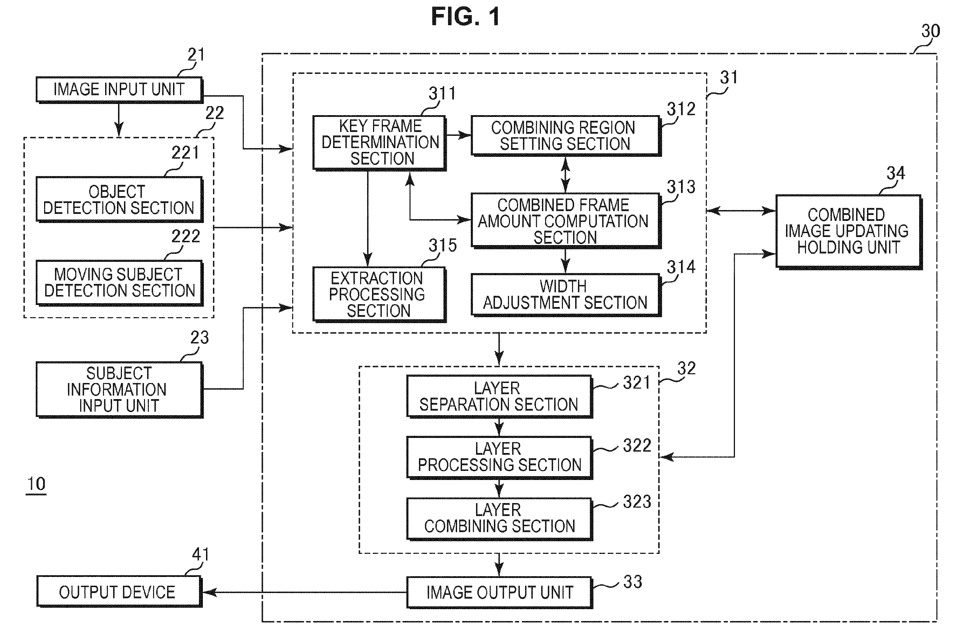

FIG. 1 illustrates a configuration of a system using an image processing device of the present technology. The system 10 has an image input unit 21, a subject information generation unit 22, a subject information input unit 23, an image processing device 30, and an output device 41. In addition, the image processing device 30 has an image selection unit 31, an image combining unit 32, an image output unit 33, and a combined image updating holding unit 34.

The image input unit 21, the subject information generation unit 22, the subject information input unit 23, the image processing device 30, and the output device 41 are not necessarily limited to being provided in a same housing. For example, the image input unit 21, the subject information generation unit 22, the subject information input unit 23, and the output device 41 may be provided in separate housings. In addition, only one of the subject information generation unit 22 and the subject information input unit 23 may be provided.

The image processing device 30 is provided inside an apparatus, for example, a video camera or a digital still camera, a mobile apparatus such as a mobile telephone or a tablet terminal having an imaging function, a server in which image signals of a captured image are recorded or an editing device which processes image signals, a video reproduction device, or the like. In addition, the image processing device may be configured as one apparatus dedicated to image processing. Furthermore, the image processing device may be configured as a device which executes an image processing function associated with software and hardware or realized by any one of them in a personal computer or the like.

The image input unit 21 inputs a frame image group which serves as a source of a motion transition image to be generated. Note that each frame image may be one frame constituting a moving image or one still image obtained from, for example, consecutive capturing.

When the image processing device 30 is mounted in an imaging device, the image input unit 21 is constituted by an imaging optical system, an image sensor, a camera signal processing unit, and the like, thereby generating image signals of captured images. In addition, when a captured image obtained by an external image device is to be accepted, the image input unit 21 serves as a reception processing system of image signals supplied from the external device. For example, a tuner unit for broadcasting waves, an interface unit such as a USB (Universal Serial Bus) interface, and further a wired or a wireless network communication unit, or the like is assumed. In addition, when image signals are recorded in a memory card (a solid-state memory), or a recording medium such as an optical disc, the image input unit 21 serves as a reproduction system of such recording media.

The image input unit 21 performs generation, reception, or reading of image signals of each frame as a moving image and image signals for a plurality of frames obtained through still image consecutive capturing, or the like, and supplies the signals to the image processing device 30 and the subject information generation unit 22.

Note that the image input unit 21 may perform pre-processing if necessary. The image input unit performs appropriate conversion of an image into a form necessary for a process such that, when a moving image file is received, the image input unit develops the moving image in the form of each frame, and when an interlaced image is received, the image input unit converts the image into a progressive form. In addition, there are cases in which the image input unit performs enlargement and reduction of an image.

The subject information generation unit 22 recognizes a subject using an image signal or external information (such as depth information) supplied from the image input unit 21, then generates a recognition result of a state of the subject, for example, a motion state for each frame as subject information, and then outputs the result to the image processing device 30. The subject information generation unit 22 has, for example, an object detection section 221 and a moving subject detection section 222.

The object detection section 221 detects a subject, for example, a human body or a portion of a human body of which motion transition should be observed through template matching, learning, or the like, and then subject information which indicates a portion of a frame image that is an image region of a predetermined object is generated. In detection of a human body, for example, a face is detected, and using a result of the detection, a human body is detected. In addition, in detection of a portion of a human body, for example, a portion of a human body can be detected based on whether or not an image in a shape corresponding to a torso, a hand, a foot, or the like is included in a region set with reference to a detected face.

The moving subject detection section 222 detects a moving subject and then generates subject information indicating which portion of a frame image is a moving subject region and which part thereof is a background region. When, for example, an imaging direction and an angle of view are fixed, the moving subject detection section 222 computes the difference between image signals of two frames, and then determines a region in which the difference is smaller than a threshold value to be a background region and a region in which the difference is equal to or greater than the threshold value to be a moving subject region. Note that, when there are a plurality of subjects, the moving subject detection section 222 separates the subjects, in addition to separation of a moving subject and a background. In this case, separation may be performed according to depths. When a plurality of subjects are separated according to depths, subject information is multivalued information representing a depth of each pixel, rather than binary information representing whether each pixel is a moving subject or background.

The subject information input unit 23 acquires subject information supplied from an external device or the like and then outputs the information to the image processing device 30.

Note that at least one of the subject information generation unit 22 and the subject information input unit 23 may be provided. In addition, when the subject information generation unit 22 and the subject information input unit 23 are provided, subject information generated by the subject information generation unit 22 and subject information acquired by the subject information input unit 23 may be output to the image processing device 30. In this case, the image processing device 30 performs a process using at least one piece of the subject information or a process using both pieces of the subject information.

The image selection unit 31 of the image processing device 30 decides a width of a combining target image to be combined for a combining-completed image for each of input frames sequentially supplied from the image input unit 21 according to the subject information. Note that, when the combining target image is combined with the combining-completed image by disposing the combining target image in a horizontal direction (which corresponds to a case in which a connection direction is the horizontal direction), the size of the combining target image in the horizontal direction is set to the width of the combining target image. In addition, when the combining target image is combined with the combining-completed image by disposing the combining target image in a vertical direction (which corresponds to a case in which a connection direction is the vertical direction), the size of the combining target image in the vertical direction is set to the width of the combining target image. In addition, the same applies to the widths of other images, and the regional widths of a region of interest, a motion transition effective region, a residual background region, and the like to be described later.

The image selection unit 31 decides at least one of a moving subject layer and a background layer in the input frames according to the subject information. In deciding a width of the combining target image, the image selection unit 31 extracts a region in which the subject information represents a specific state as a region of interest in, for example, the moving subject layer of the input frames. The image selection unit 31 decides the regional width of the region of interest as a width for combining the background layer of the input frames with the combining-completed image. In addition, the image selection unit 31 decides a width for combining the moving subject layer of the input frames with the combining-completed image based on, for example, the width of the moving subject in the moving subject layer of the input frames.

The image selection unit 31 performs image extraction of the combining target image and then outputs the extracted image to the image combining unit 32. In addition, the image selection unit 31 generates combining process information representing the region of interest and then outputs the information to the image combining unit 32. Furthermore, the image selection unit 31 outputs the subject information supplied from the subject information generation unit 22 and the subject information input unit 23 to the image combining unit 32. Note that the image extraction may be performed by the image combining unit 32. In this case, the image selection unit 31 causes information representing a region of the combining target image to be included in the combining process information and then outputs the information to the image combining unit 32.

The image selection unit 31 includes a key frame determination section 311, a combining region setting section 312, a combined frame amount computation section 313, a width adjustment section 314, and an extraction processing section 315.

The key frame determination section 311 performs a process of identifying a frame that will serve as a key frame from sequentially supplied frame images. Key frame images refer to a plurality of images with different time axes which are left as traces of motion transition in a motion transition image (still image) that is a finally obtained combining-completed image. For example, in a group of consecutive frame images in terms of time, frame images captured at equal intervals per proper unit time are generally assumed to be key frame images. In addition, the key frame determination section 311 may generate a motion transition image using all sequentially supplied frame images as key frame images.

In addition, intervals of key frames are not necessarily set to equal time intervals, and may be intervals suitable for visually checking motion transition of an imaging target. For example, by detecting a key frame of interest, intervals of key frames may be adjusted with reference to the key frame of interest. The key frame of interest may be designated by a user, or automatically decided based on a result of image recognition. In image recognition, a change in the shape of an object, a change in an attitude of a human body, a movement speed of an object, an acceleration of an object, a change in a movement direction of an object, and the like are detected, and a key frame in which a desired shape change or attitude change occurs is set as a key frame of interest. The key frame determination section 311 determines, for example, a time point at which a motion of a moving subject is quickest as a key frame of interest such that a time interval (frame interval) of key frames becomes longer as the motion of the moving subject becomes slower. In addition, when the key frame determination section 311 attempts to determine key frames by setting a time point at which an acceleration of a moving subject significantly changes as a key frame of interest, in the case of a soccer game, for example, when a ball is set as the moving subject, a timing at which shooting is performed can be set as a frame of interest. In addition, the key frame determination section 311 may set a key frame of interest using, for example, sounds generated when a ball is hit by a golf club, a bat, a racket or the like. In this case, the key frame is set by shortening a time interval (frame interval) near the time at which, for example, the ball was hit.

When a still image is generated as a motion transition image, and when the number of combined frames is changed by the combined frame amount computation section 313 to be described later, the key frame determination section 311 performs determination of key frames again according to the changed number of combined frames. The key frame determination section 311 outputs image signals of the key frames determined when the number of combined frames is confirmed to the extraction processing section 315. In addition, when a moving image is generated as a motion transition image, image signals of all input frame images are output to the extraction processing section 315.

The combining region setting section 312 sets a region of a combining target image for each key frame or each frame according to a state of a subject based on subject information supplied from the subject information generation unit 22 and the subject information input unit 23. For example, the combining region setting section 312 decides a width for combining a moving subject layer of an input frame with a combining-completed image based on the width of a moving subject in the moving subject layer of the input frame. In addition, the combining region setting section 312 extracts a region indicating a specific state as a result of subject recognition as a region of interest in the moving subject layer of the input frame, and then decides a regional width of the region of interest as a width for combining a background layer of the input frame with the combining-completed image. This region of interest is a region in which image joining (stitching) is performed when a combining target image is combined with a combining-completed image. Note that, in description below, a region with a width for combining a moving subject layer is referred to as a motion transition effective region. In addition, a region of interest is also referred to as a residual background region because it is a region in which a background layer of an input frame is combined. Furthermore, a width in an image connection direction is the regional width of a motion transition effective region and the regional width of a region of interest (residual background region).

The residual background region (region of interest) is assumed to be a region indicating, for example, a specific state of a moving subject in a moving subject layer. If a residual background region is set as described above, the residual background region is provided within a motion transition effective region, and thus the regional width of the residual background region is equal to or shorter than the regional width of the motion transition effective region.

The combining region setting section 312 sets a motion transition effective region and a residual background region for a key frame when a still image is generated as a motion transition image, and sets the regions for each frame image when a moving image is generated as a motion transition image. In addition, the combining region setting section 312 sets a region again for a new key frame when a still image is generated as a motion transition image and when the key frame determination section 311 performs determination again due to a change in the number of combined frames caused by the combined frame amount computation section 313. Note that the method for setting a region will be described later.

When a still image is generated as a motion transition image, the combined frame amount computation section 313 computes the number of combined frames based on the regional width of a motion transition effective region and the regional width of a residual background region of the key frame so that the size of the motion transition image becomes close to the size of a display region in which the motion transition image is displayed in a connection direction (hereinafter referred to as an "image frame size"). In the case in which, for example, a motion transition image is generated to have a pre-set number of frames, when an excess or shortage of width of an image with respect to the image frame size exceeds one frame, or when the excess or shortage of width of the image with respect to the image frame size is less than one frame and exceeds a predetermined ratio, the number of combined frames is changed. When the number of combined frames is changed, the combined frame amount computation section 313 outputs the changed number of combined frames to the key frame determination section 311 and the combining region setting section 312, and thereby performs determination of a key frame and re-setting of a region according to the changed number of combined frames.

The process is repeated in the key frame determination section 311, the combining region setting section 312, and the combined frame amount computation section 313. Thus, it is possible to set the number of combined frames to an optimum value for a desired image frame size. In addition, it is possible to set key frames in the optimum number of combined frames, and a motion transition effective region and a residual background region for the key frames.

The width adjustment section 314 adjusts a regional width of the residual background region set by the combining region setting section 312 in a connection direction. When image combining is performed by joining the residual background region set by the combining region setting section 312 in the connection direction, the width adjustment section 314 adjusts the width of the residual background region so that the motion transition image that is a combined image has a desired image frame size. In the width adjustment, a uniform change method for performing width adjustment by, for example, uniformly allocating an excess or shortage of an image width to each frame may be used, or a width-proportional change method for dividing an excess or shortage of an image width in proportion to the regional width of the residual background region of each frame may be used. Furthermore, the width adjustment section 314 may set an adjustment amount based on a temporal distance from a key frame of interest (frame interval) or subject information.

The extraction processing section 315 extracts an image signal of the motion transition effective region set by the combining region setting section 312 from image signals of frame images supplied from the key frame determination section 311 and then outputs the signal to the image combining unit 32. In addition, the extraction processing section 315 outputs information representing the residual background region set within the motion transition effective region to the image combining unit 32 as combining processing information.

The image combining unit 32 combines the image of the motion transition effective region of each frame with the residual background region of a combining-completed image by joining in the connection direction according to a state of a subject based on the image signal extracted by the image selection unit 31, the combining processing information, and the subject information. The image combining unit 32 performs such image combining to generate an output image indicating motion transition.

The image combining unit 32 has a layer separation section 321, a layer processing section 322, and a layer combining section 323.

The layer separation section 321 performs layer separation of an input image (extracted image) from the image selection unit 31 based on the subject information. The layer separation section 321 separates the input image and the previous key frame image into, for example, layers of a background and a moving subject based on the subject information to generate images of layers. By performing layer separation in this manner, the layer combining section 323 to be described later can combine images of each layer in the widths of the moving subject layer and the background layer decided by the image selection unit 31. Note that, when there are a plurality of moving subjects and depths thereof are known, images may be separated into layers in the number of the moving subjects + the number of backgrounds and the width of each layer may be decided by the image selection unit 31.

The layer processing section 322 performs processing such as enlargement, reduction, and coordinate movement of the images of each separated layer. In other words, the layer processing section 322 performs such various kinds of processing on each layer that has undergone the layer separation to process in a combinable form. Processes performed by the layer processing section 322 relate mostly to geometric operations such as "enlargement and reduction," "rotation," and "parallel movement," but there are cases in which image processes such as highlighting a motion are performed. Enlargement and reduction are decided based on the number of key frames, the size of an output image, and the like.

The layer combining section 323 performs a combining process using the processed layers and the preceding combining-completed images. In other words, by performing combining based on an image processed by the layer processing section 322, the combining-completed images, the subject information, combining processing information, and the like, a motion transition image is generated. The layer combining section 323 determines which layer has pixels that should be reflected in an output image based on the subject information and the combining processing information, and then generates an output image based on a result of the determination. Note that, during combining, pixels may be selected from a single layer, and pixels of a plurality of layers may be mixed and output.

In addition, when performing image combining, the layer combining section 323 joins a residual background region in a connection direction based on the combining processing information. In addition, the layer combining section 323 may decide a disposition position according not only to a pre-decided direction but also to a state of a subject in an image to be combined for disposition in the image to be combined. For example, when a motion transition image is to be generated for a pitcher as a moving subject, since all motions of the pitcher are made mainly in the horizontal direction, a motion transition image is generated by combining images in the horizontal direction. In addition, when a motion transition image is to be generated for a tennis racket as a moving subject, images are combined in an arc shape when the racket pivots in an arc shape around a shoulder of the person holding the racket. In addition, a change in a color or the like may also be used as a change in a state.

The image output unit 33 outputs the motion transition image combined by the image combining unit 32 to the output device 41. The output device 41 represents various kinds of equipment that can be an output destination of motion transition images such as a monitor device and a storage device. A specific destination of output of motion transition images from the image output unit 33 differs depending on systems including display output, development into a memory, and writing on an external storage medium such as a hard disk, a flash memory, or a networking destination.

When a still image is generated as a motion transition image, the image output unit 33 outputs a combining-completed image completed at the time at which a combining process of as many key frame images as the number of combined frames is finished to the output device 41 as a motion transition still image.

In addition, when a moving image is generated as a motion transition image, the image output unit 33 outputs combining-completed images obtained in combining processes that are sequentially performed each time image signals are input to the image combining unit 32 from the image selection unit 31 to the output device 41. In other words, the combining-completed images obtained in the sequentially performed combining processes are output to the output device 41 as a one-frame image of a moving image showing motion transition.

In addition, at the time of still image generation in which all frame images to be combined-processed are key frame images, the image output unit 33 outputs an image signal of the image generated in combining of this time to the combined image updating holding unit 34 so as to be stored therein. By causing the image signal of the image generated in the combining of that time to be stored in the combined image updating holding unit 34, the image output unit 33 enables the image signal to be used as an image signal of the existing combining-completed image in the next process.

The image output unit 33 outputs the image signal that has undergone the combining process to the combined image updating holding unit 34 so as to be stored therein in order to enable the image signal to be used as the image signal of the existing combining-completed image in the next process only when the combining process is performed using key frame images at the time of the generation of a moving image.

The combined image updating holding unit 34 holds image signals of the combining-completed images of each time point in the course of generating a motion transition image. For example, at the time of generation of a still image, the combining-completed images of each time point output from the image output unit 33 are gradually held as new combining-completed images. For example, the image signals of combining-completed images of the past necessary in the course of the combining process of the previous round, two rounds ahead, and the like are held while being updated. In addition, information of key frames, subject information of the key frames, combining process information, and the like in each time of combining may be stored.

The combined image updating holding unit 34 gradually holds the image signals of the combined-completed images generated in the combining processes of the key frame images while updating the image signals at the time of generating a moving image. In this case, information of the key frames, subject information of the key frames, combining process information, and the like in each time of combining may be stored.

<2. First generation operation of a motion transition image>

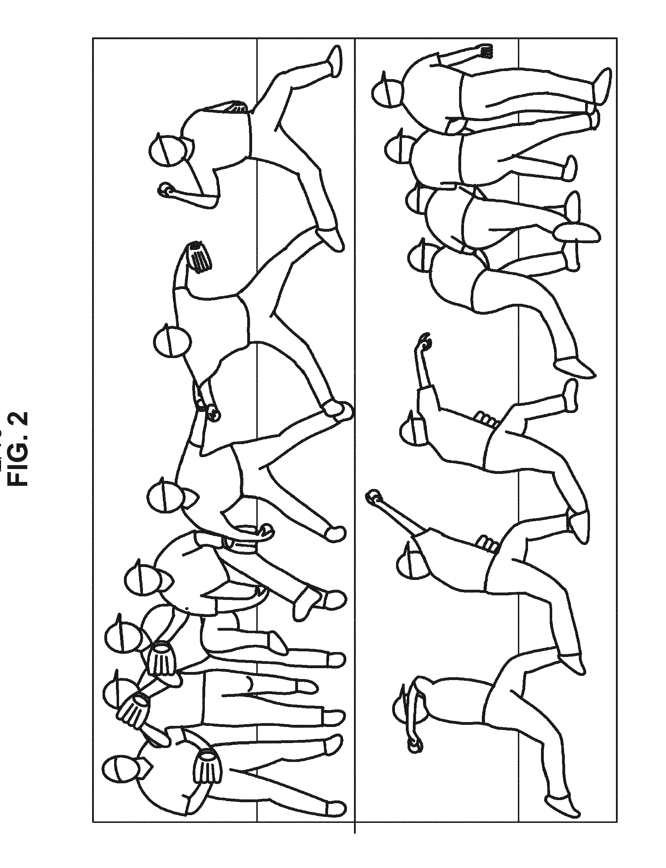

Next, a first generation operation of a motion transition image will be described. FIG. 2 illustrates a motion transition still image generated by the image processing device. The image processing device 30 generates the motion transition still image shown in FIG. 2 using image signals of a plurality of frames obtained by performing moving image capturing or consecutive still image capturing for a person who, for example, performs pitching in a baseball game as a subject. The motion transition still image of FIG. 2 is expressed with images of a number of time points in the period in which consecutive pitching motions are made in a desired image frame size. In addition, the regional widths of a motion transition effective region and a residual background region are adjusted according to states of the moving subject (the person who performs pitching), and accordingly all frames of the moving subject are expressed in the motion transition still image.

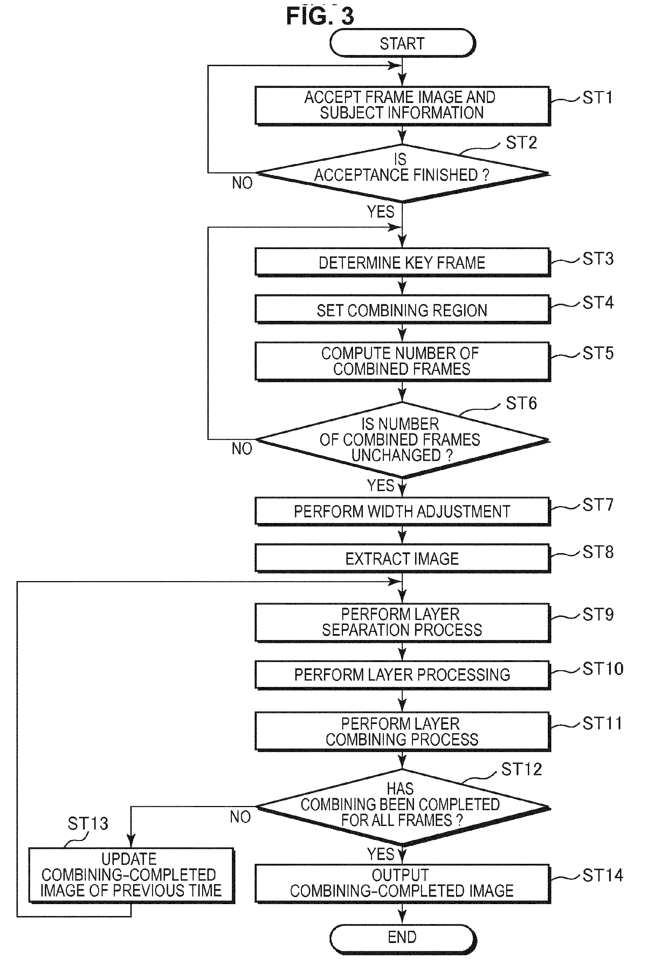

FIG. 3 is a flowchart showing the first generation operation in which a still image is generated as a motion transition image.

The image processing device 30 accepts frame images and subject information in Step ST1. After the image processing device 30 accepts the frame images supplied from the image input unit 21, the subject information generated by the subject information generation unit 22, and the subject information acquired by the subject information input unit 23 using the image selection unit 31, the image processing device proceeds to Step ST2.

The image processing device 30 determines whether or not the acceptance is finished in Step ST2. When the image processing device 30 finishes the acceptance of the frame images and subject information to be used in generation of a motion transition still image, the image processing device proceeds to Step ST3, and when the image processing device has not finished the acceptance, the image processing device returns to Step ST1 to continue the acceptance of the frame images and subject information. In this manner, when the process proceeds to Step ST3 after the acceptance is finished, a width of a combining target image and frames of images to be combined as will be described later are adjusted, thereby making a width of the motion transition still image a desired size. Note that, each time acceptance of frame images and subject information is performed, if a process of deciding a width of a combining target image to be combined with a combining-completed image and a process of combining the combining target image with the decided width and the combining-completed image to be parallel with each other in a predetermined direction are performed, a motion transition image updated each time the frame images are input can be output.

The image processing device 30 performs key frame determination in Step ST3. The image processing device 30 determines a frame image of a key frame to be used in combining from accepted frame images using the key frame determination section 311 when the number of combined frames to be described later is set as a pre-set value, and then proceeds to Step ST4.

The image processing device 30 sets a combining region in Step ST4. The image processing device 30 sets a motion transition effective region and a residual background region for the key frame using the combining region setting section 312, and then proceeds to Step ST5.

The image processing device 30 computes the number of combined frames in Step ST5. When generating a motion transition still image by linking, for example, residual background regions of key frames using the combined frame amount computation section 313, the image processing device 30 computes the number of combined frames that enables the motion transition still image to be closest to a desired image frame size, and then proceeds to Step ST6.

The image processing device 30 determines whether or not there is a change in the number of combined frames in Step ST6. The image processing device 30 determines whether the number of combined frames computed in Step ST5 has been changed from the pre-set number of combined frames, or whether the number of combined frames computed in Step ST5 has been changed from the number of combined frames computed in the previous round due to repeated computation of the number of combined frames. The image processing device 30 proceeds to Step ST7 when the number of combined frames has not been changed. In addition, when the number of combined frames has been changed, the image processing device 30 returns to Step ST3 to perform determination of a key frame according to the computed number of combined frames, thereby repeating the processes of Steps ST4 and ST5. Note that, when the change of the number of combined frames is repeated a predetermined number of times in Step ST6, the image processing device 30 proceeds to Step ST7, thereby preventing skipping of the process of Step ST7 due to the repetitive changes of the number of combined frames.

The image processing device 30 performs width adjustment in Step ST7. The image processing device 30 adjusts the regional width of the residual background region of the key frame using the width adjustment section 314 so that the motion transition still image has a desired image frame size. In addition, the width adjustment section 314 generates combining process information representing the adjusted residual background region, and then proceeds to Step ST8.

The image processing device 30 performs image extraction in Step ST8. The image processing device 30 extracts an image of the motion transition effective region from the key frame, and then proceeds to Step ST9.

The image processing device 30 performs a layer separation process in Step ST9. The image processing device 30 performs the layer separation process based on the subject information using the layer separation section 321 to separate the motion transition effective region of the key frame into, for example, a moving subject layer and a background layer, and then proceeds to Step ST10.

The layer separation may be stored in a memory area by creating an image of each layer. Layer separation may be performed by creating layer separation information. The layer separation information is information expressing a finally effective layer using a pixel value for an overlapping portion of motion transition effective regions of the key frame of the previous time and the key frame of this time, i.e., each pixel in the combining target region.

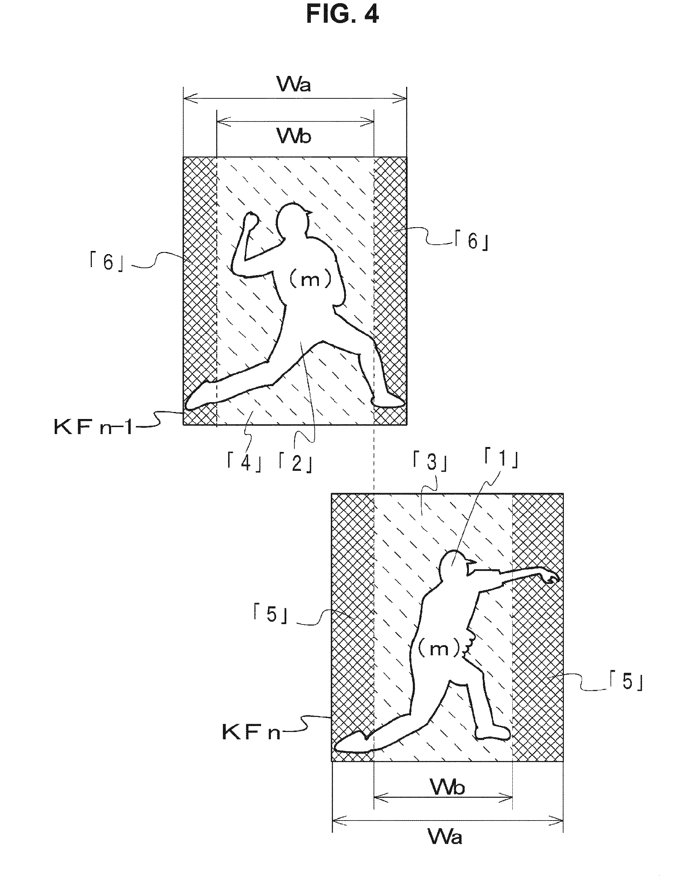

FIG. 4 illustrates layer separation information. Layer separation information of pixels in a moving subject region m of a motion transition effective region Wa in, for example, a key frame KFn of this time is set to have the determination value "1." In addition, layer separation information of pixels of the background region (the region excluding the moving subject region m (the region denoted by hatching of the dashed lines)) in a residual background region Wb of the key frame KFn is set to have the determination value "3." Furthermore, layer separation information of pixels of the background region of the region obtained by excluding the residual background region Wb from the motion transition effective region Wa in the key frame KFn (the region excluding the moving subject region m (the region denoted by cross hatching)) is set to have the determination value "5." In addition, for the key frame KFn-1 of a combining-completed image used in the final combining, the value obtained by adding "1" to the determination value of when the key frame KFn-1 is set. In other words, layer separation information of pixels of the moving subject region m of the motion transition effective region Wa in the previous key frame KFn-1 is set to have the determination value "2." In addition, layer separation information of pixels of the background region (the region denoted by hatching of dashed lines) in the residual background region Wb of the key frame KFn-1 is set to have the determination value "4." Furthermore, layer separation information of pixels of the background region of the region obtained by excluding the residual background region Wb from the motion transition effective region Wa of the key frame KFn-1 (the region denoted by cross hatching) is set to have the determination value "6." Note that a pixel having a small pixel value of layer separation information is set to have high priority, and a pixel having a large pixel value is set to have low priority.

The image processing device 30 performs layer processing in Step ST10. The image processing device 30 performs processing necessary for layer combining using the layer processing section 322, and then proceeds to Step ST11. As such processing, for example, enlargement, reduction, or rotation of an image, or the like is performed according to the size of an input image and a size thereof in which the input image is reflected on a combining resultant image. Particularly, there are cases in which the process of enlargement, reduction, or rotation is not necessary when each pixel of the input image is reflected in a combining result without change, or the like.

The image processing device 30 performs a layer combining process in Step ST11. The image processing device 30 performs the layer combining process using the layer combining section 323 to generate a new combining-completed image from the combining target image of the key frame of this time and the combining-completed image, and then proceeds to Step ST12. The layer combining section 323 combines the image combining target image of the key frame of this time with the combining-completed image to be parallel with each other in a predetermined direction. The layer combining section 323 performs the layer combining process of the combining-completed image and the combining target image by linking the residual background region of the combining target image to the residual background region of the combining-completed image in the predetermined direction.

In the layer combining process of the combining-completed image and the combining target image, the layer combining section 323 is set to use pixels having high priority for a portion in which the combining target image of the key frame of this time overlaps the combining-completed image. In FIG. 4, for example, the pixels of the moving subject region m of the key frame KFn of this time have the determination value "1," and the pixels of the moving subject region m of the previous key frame KFn-1 have the determination value "2." Thus, for the portion in which the moving subject region m of the key frame KFn of this time overlaps the moving subject region m of the previous key frame KFn-1, the pixel values of the pixels of the moving subject region m of the key frame KFn of this time having high priority are set to be pixel values of a new combining-completed image. In addition, the pixels of the moving subject region m of the previous key frame KFn-1 have the determination value "2," and the pixels of the background region in the residual background region Wb of the key frame KFn of this time have the determination value "3." Thus, for the portion in which the background region in the residual background region Wb of the key frame KFn of this time overlaps the moving subject region m of the previous key frame KFn-1, the pixel values of the pixels of the moving subject region m of the previous key frame KFn-1 having high priority are set to be pixel values of a new combining-completed image. Furthermore, the same process is performed on the portion in which the background region of the key frame KFn of this time overlaps the background region of the previous key frame KFn-1. The layer combining section 323 performs the process using the pixel value of the pixels of the residual background region Wb in the key frame KFn of this time and the pixel values of the pixel of residual background region Wb in the previous key frame KFn-1 as pixel values of new combining-completed images. In other words, a new combining-completed image is an image in which the background of a residual background region in a key frame is left. Note that the new combining-completed image is a combining-completed image when the next key frame image is combined.

As described above, by selecting and using a pixel value of a key frame image of this time or a combining-completed image according to a determination value of layer separation information, a new combining-completed image for which combining has been performed in the priority order can be generated.

The image processing device 30 determines whether or not combining has been completed for all frames in Step ST12. The image processing device 30 determines whether or not combining has been completed for all key frames. The image processing device 30 proceeds to Step ST13 when a key frame which has not undergone combining remains, and proceeds to Step ST14 when combining has been completed for all key frames.

The image processing device 30 performs updating of the previous combining-completed image in Step ST13. The image processing device 30 updates the combining-completed image stored in the combined image updating holding unit 34 with the combining-completed image newly generated in Step ST11, and then returns to Step ST9.

The image processing device 30 performs output of a combining-completed image in Step ST14. The image processing device 30 outputs the image signal of the combining-completed image finally obtained in the image combining unit 32 as the image signal of an output image to the output device 41 or the like from the image output unit 33.

As described above, the image processing device 1 of the present example generates and outputs image data of one motion transition still image.

Note that generation of layer separation information is not limited to priority shown in FIG. 4. When priority of the background region of the motion transition effective region Wa in, for example, the key frame of this time is raised by, for example, changing priority of the background region of the key frame, the background region of the motion transition effective region in the key frame of this time can be displayed in a combining-completed image.

Next, a specific example of a process of generating a motion transition image executed by the image selection unit 31, the image combining unit 32, the image output unit 33, and the combined image updating holding unit 34 will be described.

The key frame determination section 311 determines a number of key frame images which are a plurality of images having different time axes remaining in a same still image as a trajectory of motion transition corresponding to the number of a pre-set value. In addition, when the combined frame amount computation section 313 that will be described later adjusts the number of combined frames, i.e., the number of key frames to be used in combining, the key frame determination section 311 determines the key frames again according to the adjusted number of combined frames.

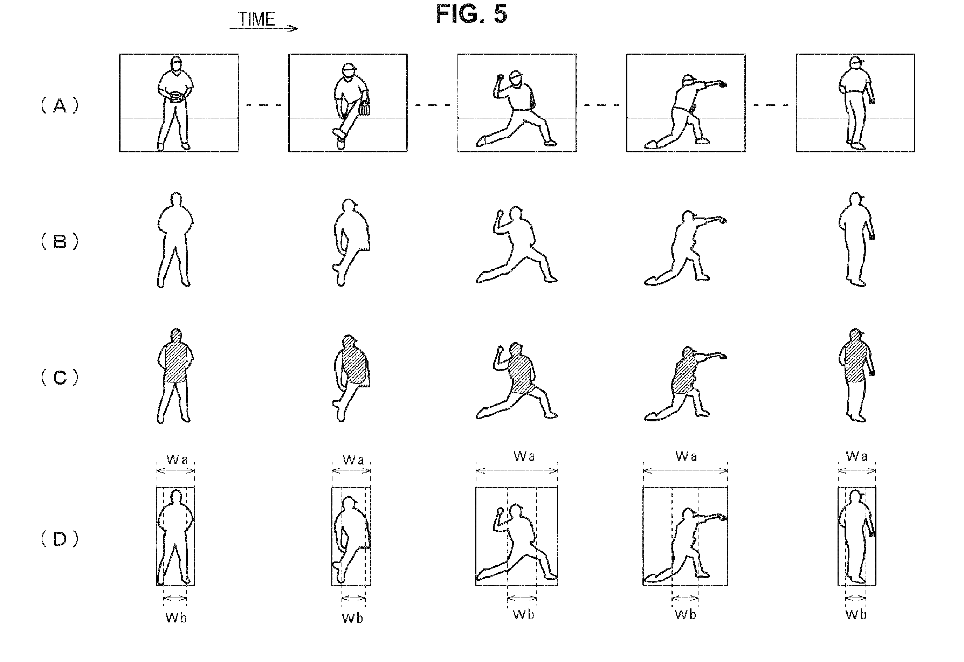

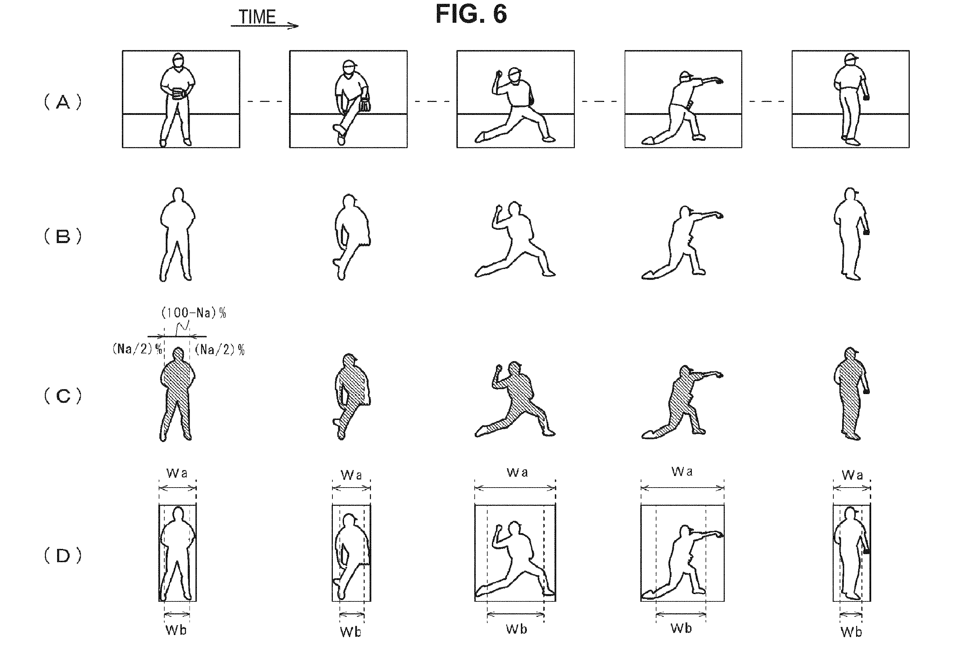

The combining region setting section 312 sets a motion transition effective region and a residual background region for each input frame based on subject information. For example, the combining region setting section 312 sets a minimum rectangular region that includes an entire moving subject that makes a motion to be observed as a motion transition effective region. In addition, as a region indicating a specific state, for example, a rectangular region indicating a desired state portion or a motion part of the entire moving subject described above is set as a residual background region. In this case, the residual background region is positioned within the motion transition effective region. Setting of the motion transition effective region and the residual background region is only performed for the key frames when a still image is to be generated. FIGS. 5 and 6 are diagrams for describing a motion transition effective region and a residual background region. For example, (A)s of FIGS. 5 and 6 exemplify some key frames. In addition, (B)s of FIGS. 5 and 6 exemplify images of a moving subject of which motion transition should be observed in the key frames.

When moving subject detection and human body detection or human body portion detection are performed in generation of subject information, the combining region setting section 312 performs human body detection masking on the moving subject as shown in, for example, (C) of FIG. 5 to detect, for example, the position of the head and the body part as indicated by the slashes. Next, the combining region setting section 312 sets a minimum width rectangular region that includes the entire body (entire moving subject) as a motion transition effective region Wa as shown in (D) of FIG. 5, and sets a rectangular region that includes the position of the head and the body part detected through the human body detection mask as a residual background region Wb.

When moving subject detection and human body detection or human body portion detection are performed in generation of subject information, the combining region setting section 312 performs human body detection masking on the moving subject as shown in, for example, (C) of FIG. 5 to detect, for example, the position of the head and the body part as indicated by the slashes. Next, the combining region setting section 312 sets a minimum width rectangular region that includes the entire body (entire moving subject) as a motion transition effective region Wa as shown in (D) of FIG. 5, and sets a rectangular region that includes the position of the head and the body part detected through the human body detection mask as a residual background region Wb.

In addition, the combining region setting section 312 may use a subject cumulative area mask when setting the residual background region. In the subject cumulative area mask, positions in which the area of a subject portion has a predetermined ratio with respect to the left and right (upper and lower) regions are set as the boundary of the mask.

FIG. 6 is a diagram for describing the subject cumulative area mask. When the boundary of the mask is set to Na% in the subject cumulative area mask as shown in (C) of FIG. 6, each of the left and right regions accounts for (Na/2)% of the entire area of the moving subject, and the center portion accounts for (100-Na)% of the area of the moving subject. Here, the residual background region Wb is set in the position of Na%, and the motion transition effective region Wa is set in the position of 0% as shown in (D) of FIG. 6.

In addition, the combining region setting section 312 may set the residual background region so that a desired motion part is included therein. For example, in a pitching motion, the combining region setting section 312 may set the residual background region so that a portion having a sweeping motion such as a hand or an arm is included therein based on a detection result of a human body portion or a subject making a motion.

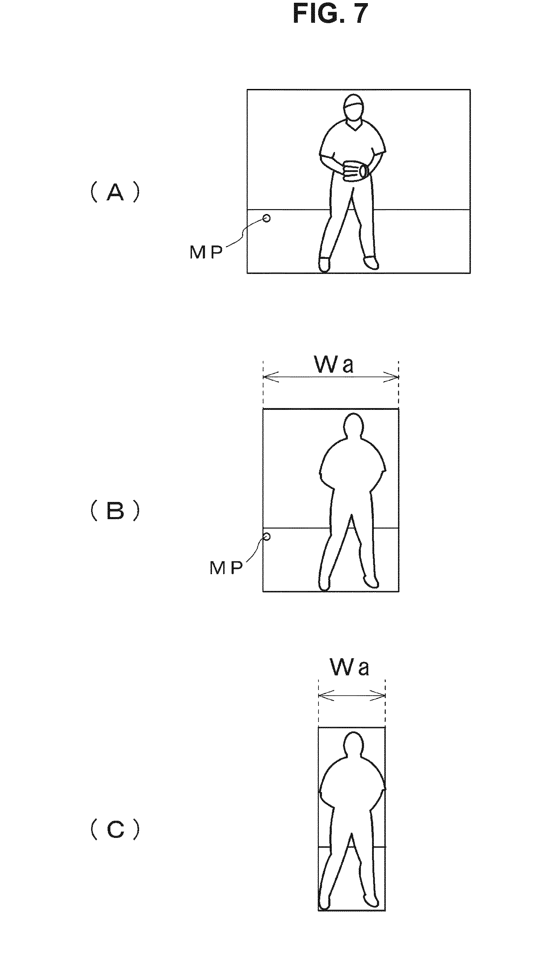

In addition, if the motion transition effective region is set using a threshold value Th, noise can be removed. For example, when a movement is made in a portion MP of the background as shown in (A) of FIG. 7, the motion transition effective region Wa is set so that the portion MP is included therein as shown in (B) of FIG. 7. However, if the threshold value Th is set to be greater than the area of the portion MP, the motion transition effective region Wa can be set so that the portion MP is not included therein as shown in (C) of FIG. 7.

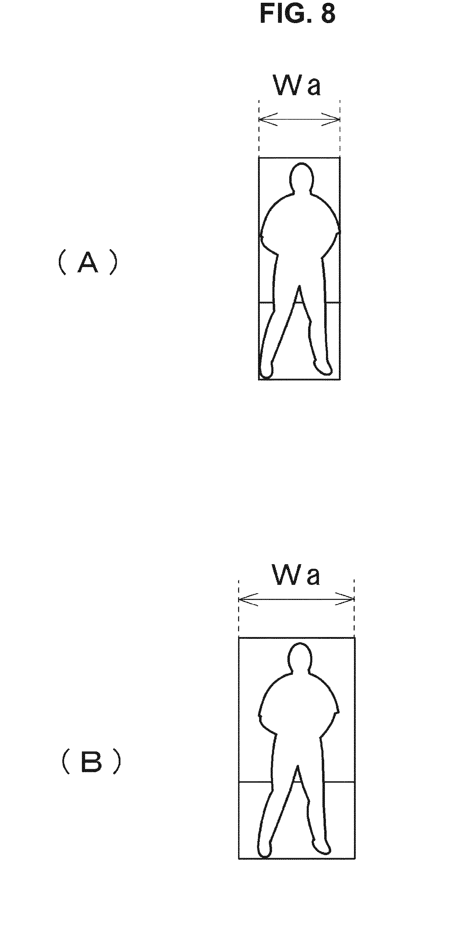

In addition, the motion transition effective region is not limited to being set as a minimum width rectangular region that includes the entire moving subject as shown in (A) of FIG. 8, and may be a region having room for the moving subject wider than the minimum width rectangular region as shown in (B) of FIG. 8. Furthermore, the residual background region may be set according to a state of the subject. In this manner, the combining region setting section 312 decides the motion transition effective region and the residual background region.

With regard to the combined frame amount computation section 313, various techniques are considered for automatic computation of the number of combined frames, but herein, a technique using a repetitive process will be described.

In the technique using the repetitive process, the width of a combining-completed image in a connection direction is first computed by arranging residual background regions of key frames to join with each other in the connection direction using the initial value of the number of combined frames. It is very rare for the width of the combining-completed image to have an image frame size in this case, and an increase or a decrease in the number of frames is necessary. Thus, the combined frame amount computation section 313 calculates an excess or shortage of the number of frames in units of decimals, and then, for example, rounds off the calculation result, thereby obtaining a necessary increase or decrease amount of frames. In addition, when the combining-completed image is displayed in multiple tiers, for example, two tiers, the combined frame amount computation section 313 computes an excess or shortage of each of the upper and lower tiers, and then computes a necessary increase or decrease amount of frames from the computation result. Note that, for the initial value of the number of combined frames, a pre-set fixed value may be used, or a value designated by a user or the like may be used. For example, a size of a display region in the connection direction in which a motion transition image is displayed is assumed to be 1920 pixels, the number of key frames to be 21 frames, the motion transition effective region Wa to be 480 pixels, the residual background region Wb to be 160 pixels, and the residual background region Wb is assumed to be positioned at the center of the motion transition effective region Wa. In this case, if the number of combined frames is 10 frames, the width of the combining-completed image is 1920 pixels. Thus, the initial value of the number of combined frames is 10 frames.

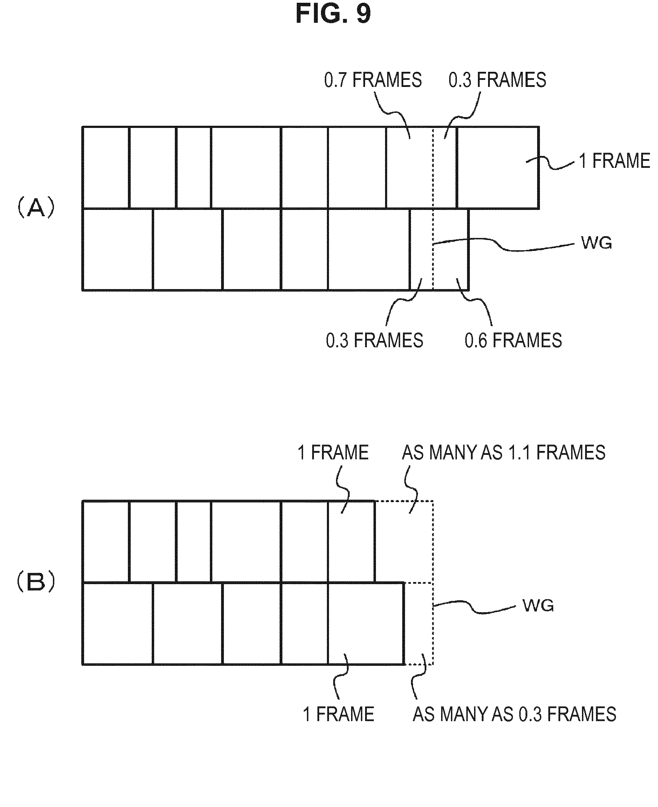

FIG. 9 is a diagram for describing computation of the number of combined frames, showing a case in which residual background regions of key frames are combined by being arranged in order in the horizontal direction. When a size of a motion transition still image fails to reach a desired image frame size WG in computation of the number of combined frames, the number of combining frames is increased or decreased so that an excess or a shortage is minimized. For example, for an excess or a shortage of frames, a number of frames obtained to be cut is decided by rounding off numbers after the decimal point. As shown in (A) of FIG. 9, when the upper tier exceeds 1.3 frames and the lower tier exceeds 0.6 frames, for example, one frame is cut from each of the upper tier and the lower tier. In addition, when there is a shortage, if the residual background region of the frame on the left side closest to the boundary of the image frame size WG is set to a one-frame size, the number of frames corresponding to the shortage is computed, and the number of frames to be increased is decided by rounding off numbers after the decimal point. When, for example, the upper tier lacks 1.1 frames and the lower tier lacks 0.3 frames as shown in (B) of FIG. 9, the upper tier has an increase of one frame, and the lower tier maintains the present number of frames. In this manner, the number of combined frames is computed.

When the combined frame amount computation section 313 changes the number of combined frames, the key frame determination section 311 determines key frames again according to the change of the number of combined frames. For this reason, the combined frame amount computation section 313 outputs the changed number of combined frames to the key frame determination section 311, and then new key frames are determined.

When the number of key frames is changed as described above, frames to be used as key frames are changed. This is because the key frames themselves are decided based on the number of combined frames used in generation of a still image and the change of the number of combined frames means modification of the key frames. There are cases in which the key frames selected again in this manner have different residual background regions from the key frames used before the change of the number of combined frames. Thus, the combining region setting section 312 performs computation of a motion transition effective region and a residual background region for the new key frames, and based on the computation result, the combined frame amount computation section 313 computes of the number of combined frames again.

The same process is performed thereafter, and the number of frames when there is no change of the number of combined frames is set to the number of combined frames in image combining. Note that, when the change of the number of combined frames does not disappear, the number of frames when the process is repeated a predetermined number of times is set to the number of combined frames.

The width adjustment section 314 adjusts an image width so that the image size after combining is a desired image frame size WG. There are cases in which the size of a motion transition still image does not become equal to the desired image frame size WG even when the number of combined frames is computed as described above. Thus, the width adjustment section 314 makes the image size of the motion transition still image equal to the desired image frame size WG by adjusting the regional width of the residual background region.

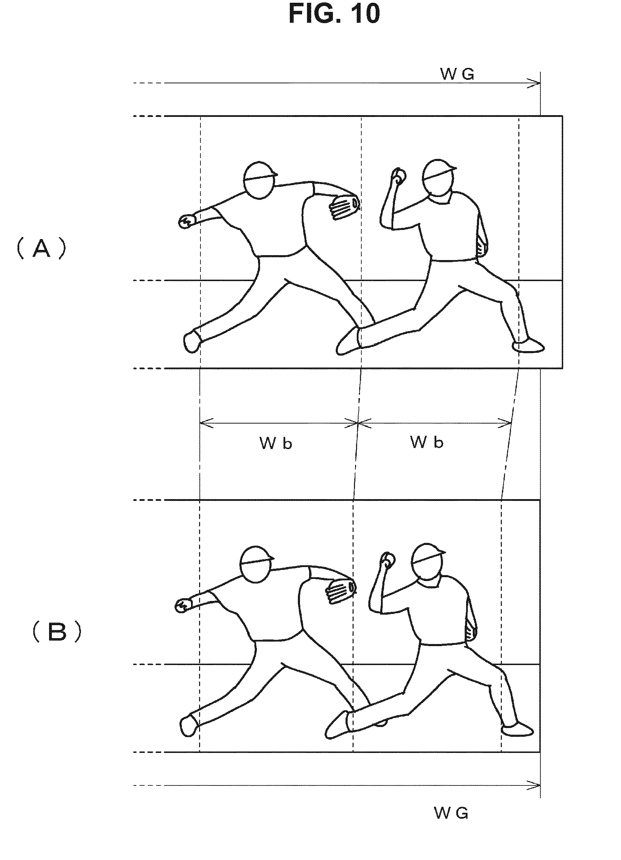

FIG. 10 is a diagram for describing an operation of the width adjustment section. When image combining is performed by computing an optimum number of combined frames, there are cases in which the number does not become equal to the desired image frame size WG. (A) of FIG. 10 illustrates a case in which the image size of a motion transition still image that is an output image exceeds the desired image frame size WG. In such a case, the width adjustment section 314 adjusts the regional width of the residual background region so as to narrow down the regional width of the residual background region as shown in (B) of FIG. 10, and accordingly the image size of the motion transition still image becomes substantially equal to the desired image frame size WG.

Various techniques for adjusting the width of the residual background region are considered, but herein two simple techniques will be described. In a uniform change method, excesses or shortages of the image widths of frames are uniformly adjusted, thereby making an image size after combining substantially equal to the desired image frame size WG. In other words, the width adjustment section 314 performs an arithmetic operation of the formula (1) to compute a shared changed frame width dWi for the frames, thereby performing width adjustment. Note that, in the formula (1), Wsub represents an excess or shortage of a width, and nwk represents the number of frames. If the uniform change method is used, the adjustment is uniformly performed for each of frames, and accordingly naturally fine adjustment is possible.

[Math. 1]

$$dW_i = \frac{W_{sub}}{n_{wk}} \qquad \cdots (1)$$

In the width-proportional change method, excesses or shortages of image widths are distributed in proportion to the regional widths of residual background regions of frames, thereby making an image size after combining substantially equal to the desired image frame size WG. In other words, the width adjustment section 314 performs an arithmetic operation of the formula (2) to compute a changed frame width dWj of a jth frame, thereby performing width adjustment. Note that, in the formula (2), Wsub represents an excess or shortage of a width, Wj represents the image width of the jth frame, and nwk represents the number of combined frames. If such a width-proportional change method is used, a frame with a small width is little affected, and accordingly naturally fine adjustment without a conspicuous change is possible.

[Math. 2]

$$dW_j = \frac{W_{sub} W_j}{\sum\limits_{j=1}^{n_{wk}} W_j} \qquad \cdots (2)$$

<3. Second generation operation of a motion transition image>

In the first operation described above, the case in which the number of combined frames and an image width are adjusted so that the image size of a motion transition sill image becomes equal to the desired image frame size WG has been described. Next, in a second operation, a case in which motion transition effective regions and residual background regions are set in each of frame images according to a subject state, a combining process is performed in the order of the frames by joining the residual background regions with each other, and thereby a motion transition moving image indicating motion transition is generated will be described. Note that, in generation of a motion transition moving image, since images obtained by performing the combining process in the order of frames are displayed, computation of the number of combined frames and adjustment of an image width for making the image size of the finally obtained combining-completed image substantially equal to a desired image frame size are performed in advance.

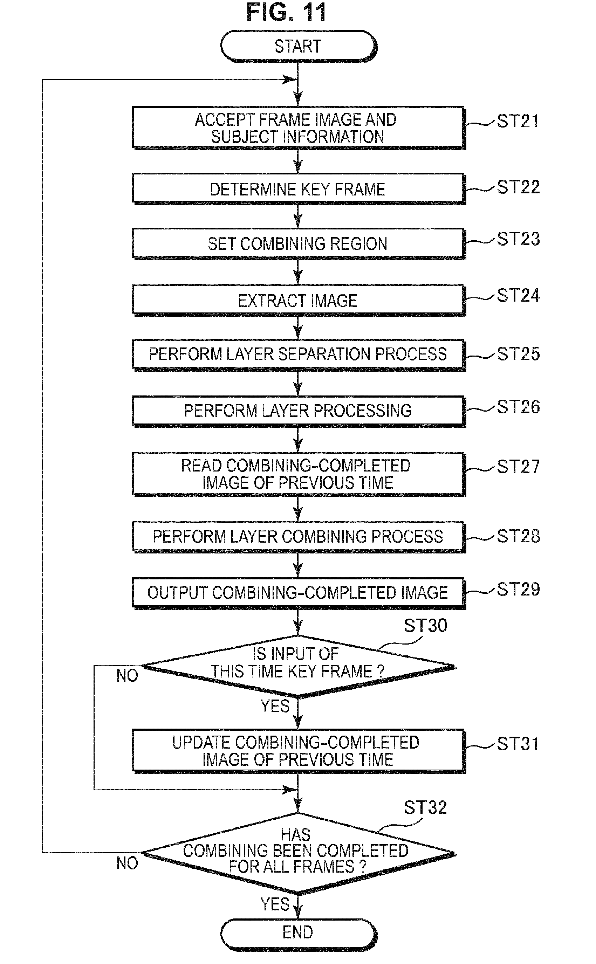

FIG. 11 is a flowchart showing the second generation operation. The image processing device 30 accepts frame images and subject information in Step ST21. The image processing device 30 accepts frame images supplied from the image input unit 21, subject information generated by the subject information generation unit 22, and subject information acquired by the subject information input unit 23 using the image selection unit 31, and then proceeds to Step ST22.

The image processing device 30 performs key frames determination in Step ST22. The image processing device 30 determines frame images of the key frames using the key frame determination section 311, and then proceeds to Step ST23.

The image processing device 30 sets combining regions in Step ST23. The image processing device 30 computes a motion transition effective region and a residual background region for each of the frames using the combining region setting section 312, and then proceeds to Step ST24.

The image processing device 30 performs image extraction in Step ST24. The image processing device 30 extracts images of the motion transition effective regions of the frame images, and then proceeds to Step ST25.

The image processing device 30 performs a layer separation process in Step ST25. The image processing device 30 performs the layer separation process based on the subject information using the layer separation section 321 to separate each of the motion transition effective regions of the key frames into a moving subject layer and a background layer, and the proceeds to Step ST26.

Layer separation may be stored in a memory area by creating an image of each layer of layer separation may be performed by creating layer separation information. The layer separation information is information expressing a finally effective layer using a pixel value for an overlapping portion of the motion transition effective regions of the key frame of the previous time and the key frame of this time, i.e., each pixel in a combining target region.

The image processing device 30 performs layer processing in Step ST26. The image processing device 30 performs processing necessary for layer combining using the layer processing section 322, and then proceeds to Step ST27. As such processing, for example, enlargement, reduction, or rotation of an image, or the like is performed according to the size of an input image and a size thereof in which the input image is reflected on a combining resultant image. Particularly, there are cases in which the process of enlargement, reduction, or rotation is not necessary when each pixel of the input image is reflected in a combining result without change, or the like.

The image processing device 30 performs reading of the combining-completed image of the previous time in Step ST27. The image processing device 30 reads the combining-completed image of the previous time stored in the combined image updating holding unit 34 using the layer combining section 323, and then proceeds to Step ST28.

The image processing device 30 performs a layer combining process in Step ST28. The image processing device 30 performs the layer combining process using the layer combining section 323 to generate a new combining-completed image from a combining target image and a combining-completed image of the frame of this time, and then proceeds to Step ST29. The layer combining section 323 combines the image combining target image of the key frame of this time with the combining-completed image to be parallel to each other in a predetermined direction. The layer combining section 323 performs the layer combining process of the combining-completed image and the combining target image by, for example, joining the residual background region of the combining target image with the residual background region of the combining-completed image in the predetermined direction.

The layer combining section 323 causes pixels of high priority to be used for a portion of the combining target image of the frame of this time overlapping the combining-completed image in the layer combining process of the combining-completed image and the combining target image.

The image processing device 30 outputs the combining-completed image in Step ST29. The image processing device 30 outputs the image signal of the combining-completed image generated by the image combining unit 32 to the output device 41 and the like from the image output unit 33, and then proceeds to Step ST30.

The image processing device 30 determines whether or not an input of this time is a key frame in Step ST30. When the frame image of this time is determined to be a key frame image, the image processing device 30 proceeds to Step ST31, and when the frame image is determined not to be a key frame image, the image processing device proceeds to Step ST32.

The image processing device 30 updates the combining-completed image of the previous time in Step ST31. Using a new combining-completed image generated by the image combining unit 32, the image processing device 30 updates the combining-completed image of the previous time stored in the combined image updating holding unit 34, and then proceeds to Step ST32.

The image processing device 30 determines whether or not combining of all frames has ended in Step ST32. The image processing device 30 determines whether or not combining has been completed for all of the frames. When a frame that has not been combined remains, the image processing device 30 returns to Step ST21, and when combining has been completed for all of the frames, the process ends.

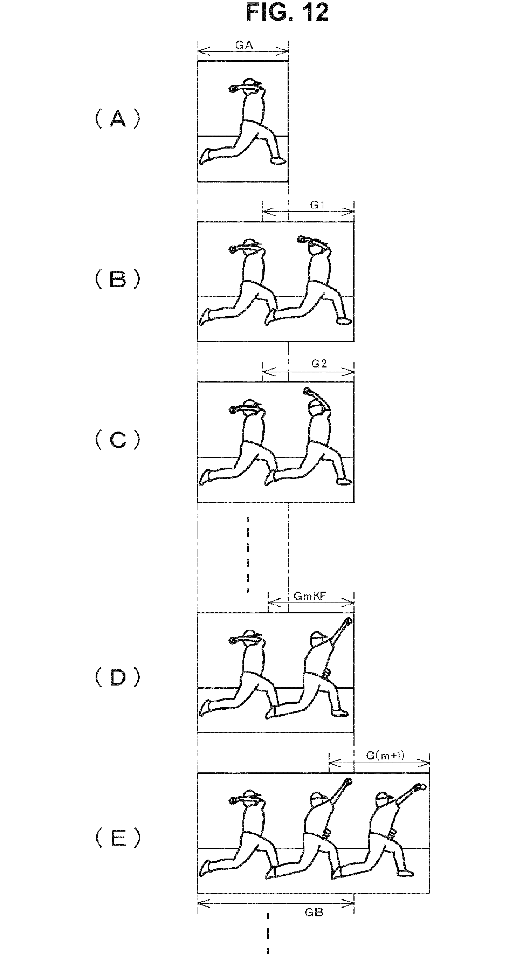

FIG. 12 is a diagram illustrating images generated in the second generation operation. (A) of FIG. 12 shows a combining-completed image (an image extracted from key frame images or a combining-completed image stored in the combined image updating holding unit 34) GA. Until the next key frame image is combined, a combining target image extracted from a frame that is not a key frame is combined with the combining-completed image GA by connecting their residual background regions. As shown in (B) of FIG. 12, for example, a combining target image G1 extracted from a frame that is not a key frame is combined with the combining-completed image GA by connecting their residual background regions. In addition, for the next frame, a combining target image G2 extracted from the next frame that is not a key frame, instead of the combining target image G1, is combined with the combining-completed image GA by connecting their residual background regions as shown in (C) of FIG. 12.

Then, when an image is extracted from the next key frame, a combining target image extracted from the next key frame is combined with the combining-completed image by connecting their residual background regions. In addition, the combining-completed image is updated to the image that has been combined with the combining target image extracted from the next key frame. As shown in (D) of FIG. 12, for example, a combining target image GmKF extracted from a key frame is combined with the combining-completed image GA by connecting their residual background regions, thereby making a new combining-completed image GB. In addition, as shown in (E) of FIG. 12, a combining target image G(m+1) extracted from the next frame that is not a key frame is combined with the combining-completed image GB by connecting their residual background regions.

Thus, an image indicating motion transition can be displayed as a moving image. In addition, in the motion transition image, the images extracted from the key frames remain as images indicating a history of motions of the moving subject.

<4. Other operations of the image processing device>

In the first and second operations described above, the case in which a combining direction of an image is the horizontal direction has been described. However, setting of a combining region, width adjustment, and a combining direction of an image are not limited to the operations described above.

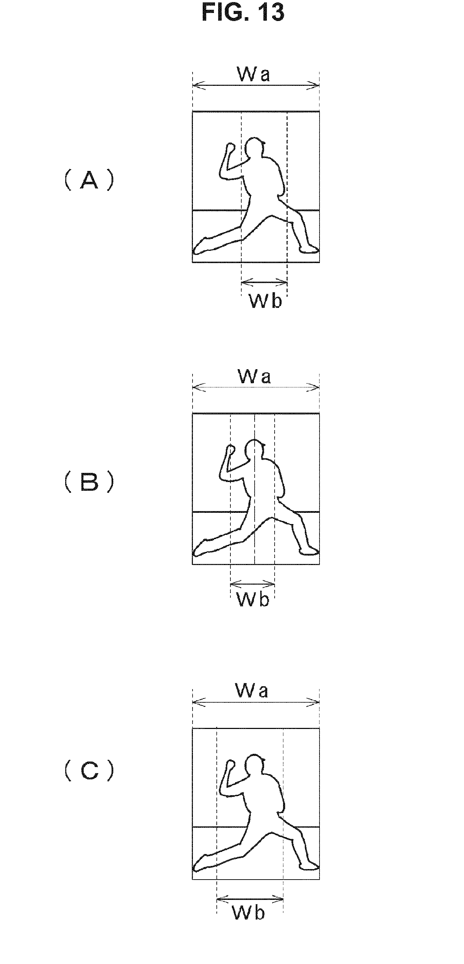

When a region is set according to a state of a subject, another method can be used instead of methods using the human body detection mask and area cumulative mask in the combining region setting. FIG. 13 is a diagram for describing another setting method of a combining region. Note that (A) of FIG. 13 shows a residual background region set using, for example, the human body detection mask for comparison.

(B) of FIG. 13 illustrates a case in which a center position is set and then a residual background region is set with reference to the center position. For example, the center position (indicated by the dashed-dotted line) is set to be the position of the face detected in human body detection. In addition, the boundaries of the residual background region can be decided in the region positioned, for example, on the right side of the center position and the region positioned on the left side thereof independently using the area cumulative mask. In this manner, the boundaries of the residual background region can be set for each of the regions divided with reference to the center position, and thus regions can be set with a high degree of freedom.

(C) of FIG. 13 illustrates a case in which a residual background region is set according to a motion of a subject. For example, portions of a human body are detected, a motion of each of the portions is determined, and then a region is set so that a portion making a quick motion (for example, the hand holding a ball) is included in the residual background region. In this manner, it is possible to prevent such a portion making a quick motion from being concealed by (a part of) the next frame image.

In addition, when object detection is performed in generation of subject information, the combining region setting section 312 may set a motion transition effective region according to a desired object. For example, when a motion transition image is generated using a captured image of tennis, a racket is detected through the object detection, and accordingly, a motion transition effective region can be set so that not only a human body but also a racket is included therein. In addition, a residual background region may be set so that the detected racket is included therein using a mask for detecting the racket.

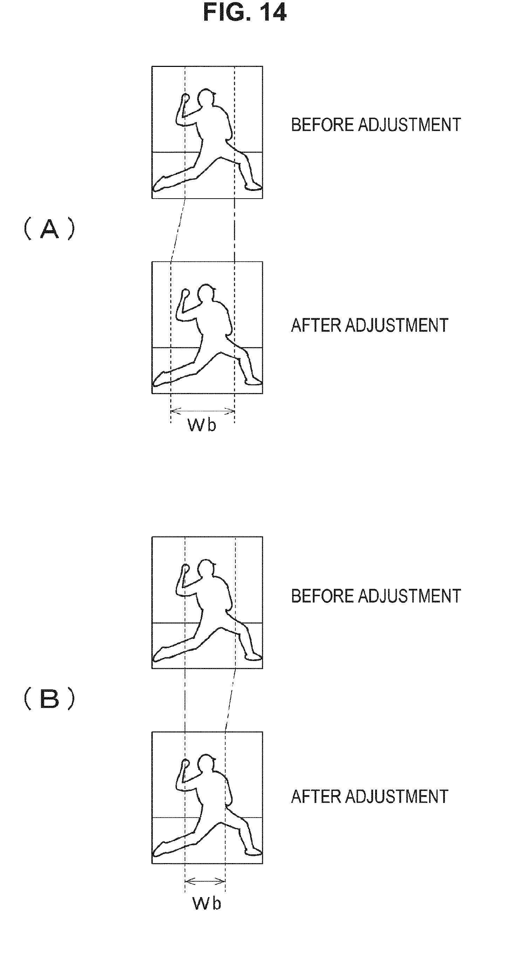

The width adjustment section 314 may control the regional width of a residual background region Wb according to a state of a subject. FIG. 14 shows a diagram for describing another width adjustment method. FIG. 14 shows a case in which width adjustment is performed using a detection result of a human body portion. When a desired width is set by widening an image width of an output image, the width adjustment section 314 performs width adjustment so that the human body portion which draws interest on motion transition (for example, the hand holding a ball) is included in the residual background region, in other words, more portions of interest are left, as shown in (A) of FIG. 14. In addition, when a desired width is set by narrowing the image width of the output image, the width adjustment section 314 performs width adjustment so that the portion which draws interest on motion transition is not deviated from the residual background region, in other words, more portions of interest are included therein, as shown in (B) of FIG. 14. If the width adjustment is performed in this manner, a human body portion or the like that is of interest can be more reliably displayed in a combining-completed image.

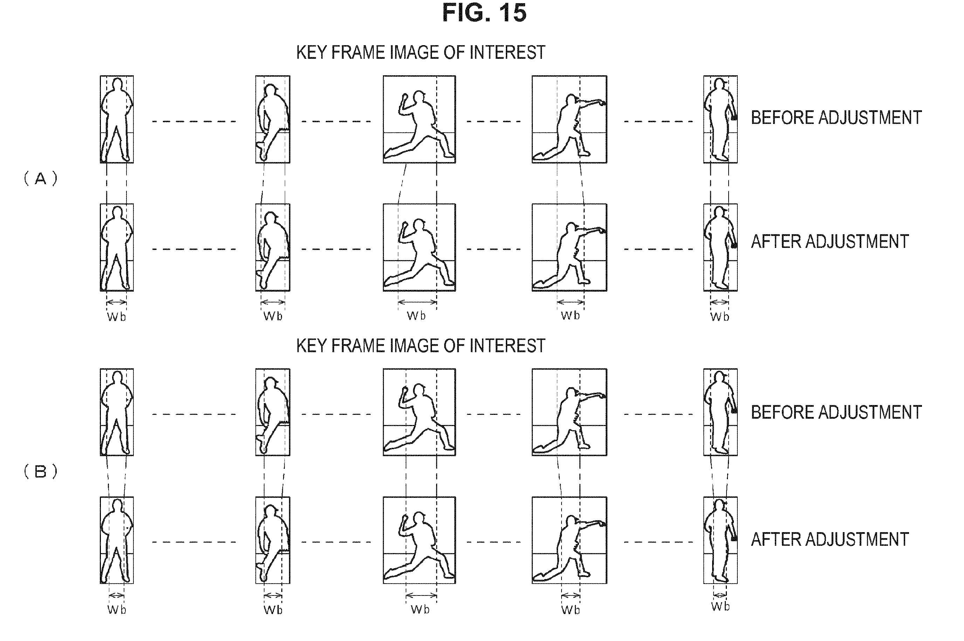

Furthermore, the width adjustment section 314 may control the regional width of the residual background region Wb according to a temporal distance (a frame interval) from a key frame of interest as shown in FIG. 15. The key frame of interest may be designated by a user as described above, or a key frame in which a subject is in a desired state or the like in image recognition is automatically identified and then the identified key frame is decided as a key frame of interest.

When an image width is to be enlarged, the width adjustment section 314 increases the regional width of the residual background region Wb to be greater than before adjustment by increasing the adjustment width of the key frame of interest and a frame having a short temporal distance with the key frame of interest (a frame coming into contact with the key frame of interest, i.e., a frame having a short frame interval) as shown in, for example, (A) of FIG. 15. In addition, when the image width is to be reduced, the width adjustment section 314 increases the regional width of the residual background region Wb by increasing the adjustment width of a frame having a long temporal distance with the key frame of interest (a frame distant from the frame of interest, i.e., a frame having a long frame interval) as shown in, for example, (B) of FIG. 15. In this manner, since a wide residual background region can be secured in the periphery of the key frame of interest, it is possible to easily check motion transition of a timing part of interest in a combining-completed image.

Furthermore, when a key frame of interest is designated by a user, or when a key frame of interest is decided using an image recognition result, the width adjustment section 314 may set the regional width of the residual background region Wb of the key frame of interest to be greater than before the key frame of interest is set. In this manner, when a region of an image portion indicating, for example, a desired state of a subject is narrow in a motion transition image and thus observation or the like is not easy, if a user instructs the image portion indicating the desired state as a key frame of interest, observation of the portion or the like becomes easy. A combining direction of an image is not limited to the horizontal direction, and may be, for example, the vertical direction. For example, a subject that is long in a lateral direction may be combined in a longitudinal direction, as in a case of ground work techniques of Judo, or the like. Furthermore, based on subject information from the subject information generation unit 22, which perpendicular direction should be set for the combining direction may be determined.

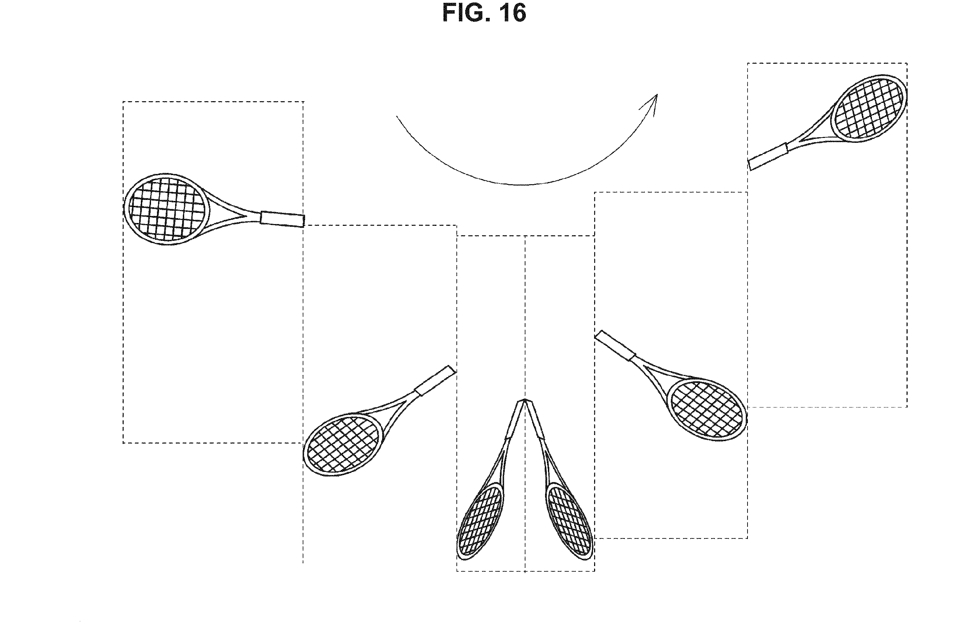

In addition, a combining position and a combining direction may be adjusted according to a state of a subject. For example, a moving subject portion is extracted from a motion transition effective region excluding a background region. Furthermore, the extracted moving subject image is pasted according to a state, for example, a motion of the moving subject. FIG. 16 illustrates a case in which a combining position and a combining direction are adjusted according to states of a moving subject. For example, when movements of a tennis racket are observed, the racket moves in an arch shape having a body as an axis. Thus, a combining direction is adjusted as the arrow indicates according to the state, for example, the movement of the moving subject, a residual background image indicating the image of the racket is combined in the arch shape, and accordingly a motion transition image that is closer to an actual movement can be generated.

In addition, a moving image indicating motion transition may be generated using the first generation operation. In this case, the processes from Step ST1 to Step ST11 of FIG. 3 are performed, and a generated combining-completed image is output. Next, the process returns to Step ST9, and then the processes from Step ST9 to Step ST11 are performed using the generated combining-completed image and a combining target image of the next key frame, thereby generating and outputting a new combining-completed image. If this process is performed, a moving image indicating motion transition can be generated.

In addition, a still image indicating motion transition may be generated using the second generation operation. In this case, the process proceeds from Step ST28 to Step ST30 of FIG. 11, and when it is determined that acceptance has ended in Step ST32, the combining-completed image is output. When the acceptance ends, combining of the combining target image of each key frame is completed. Thus, the output combining-completed image is a still image indicating motion transition.

In addition, generation of a motion transition image is not limited to the case in which images are combined in the time direction as described to display the latest state at the front, and an original state may be displayed at the front by performing combining in a reverse time direction. Note that the connection direction of this case is the opposite direction to the connection direction when images are combined in the time direction.

As described above, according to the present technology, a motion transition image can be easily generated and a motion transition image that can be easily viewed by a user can be easily generated even for a target of which a necessary frame width dynamically changes while making a motion as in, for example, pitching in a baseball game or the like. In addition, during imaging, a combining region can be automatically set according to an image by displaying advice on a monitoring screen without causing the capturing to be performed in a limited photographing environment (zoom, photographing distance, or the like), and accordingly, convenience can be significantly enhanced.

Furthermore, the processing sequence that is explained in the specification can be implemented by hardware, by software and by a configuration that combines hardware and software, as described above. In a case where the processing is implemented by software, it is possible to install in memory within a computer that is incorporated into dedicated hardware a program in which the processing sequence is recorded and to execute the program. Alternatively, it is also possible to install a program in a general-purpose computer that is capable of performing various types of processing and to execute the program.

For example, the program can be recorded on a hard disk or a ROM (Read Only Memory) as a recording medium in advance. Alternatively, the program can be temporarily or permanently stored (recorded) on a removable recording medium such as a flexible disk, a CD-ROM (Compact Disc Read Only Memory), a MO (Magneto optical) disk, a DVD (Digital Versatile Disc), a magnetic disk, or a semiconductor memory card. Such a removable recording medium can be provided as so-called package software.

In addition, the program can be, not only installed on a computer from a removable recording medium, but also transferred in a wireless or wired manner to the computer from a download site via a network such as a LAN (Local Area Network) or the Internet. In such a computer, a program transferred in the aforementioned manner can be received and installed on a recording medium such as a built-in hard disk.

Note that the present technology is not interpreted as being limited to the above-described embodiments of the technology. The embodiments of the technology disclose the present technology in the form of exemplification, and it is obvious that a person skilled in the art can make modification or substitution of the embodiments without departing from the gist of the present technology. In other words, in order to determine the gist of the present technology, the claims should be considered.

Additionally, the present technology may also be configured as below.

(1) An image processing device comprising:

an image selection unit configured to decide a width of a combining target image to be combined with a combining-completed image for each input frame according to subject information; and
an image combining unit configured to combine the combining target image having the decided width of the input frame with the combining target image to be parallel with the combining-completed image in a predetermined direction.

(2) The image processing device according to (1), wherein the image selection unit decides a width of at least one of a moving subject layer and a background layer of the input frame according to the subject information.

(3) The image processing device according to (2), wherein the image selection unit extracts a region of the moving subject layer of the input frame in which the subject information indicates a specific state as a region of interest, and decides the regional width of the region of interest as a width for combining the background layer of the input frame with the combining-completed image.

(4) The image processing device according to (2) or (3), wherein the image selection unit decides a width for combining the moving subject layer of the input frame with the combining-completed image based on a width of a moving subject in the moving subject layer of the input frame.

(5) The image processing device according to (3),

wherein the moving subject is a human body, and

wherein the image selection unit detects a desired portion of the human body using a human body detection mask, thereby deciding the regional width of the region of interest so that the desired portion is included therein.

(6) The image processing device according to (3), wherein the image selection unit decides the regional width of the region of interest using a cumulative area mask so that a cumulative area of a portion of a moving subject has a predetermined ratio.

(7) The image processing device according to any one of (2) to (6), wherein the image selection unit decides the number of frames of an image to be combined according to an image frame size and an image size of an image that has undergone the combining.

(8) The image processing device according to (7), wherein, when the image selection unit decides a key frame from the input frame and changes a number of frames of the image to be combined according to the image frame size and the image size of the image generated by combining the combining target image of the key frame, the image selection unit decides the key frame again according to the changed number of frames.

(9) The image processing device according to (7) or (8), wherein, by setting a region of interest that includes a region of interest of a desired moving subject in the moving subject layer of the combining target image, the image selection unit adjusts the regional width of the region of interest so that a size of an image generated by performing the combining by joining a region of interest of the combining target image with a region of interest of an image finally combined in the combining-completed image substantially coincides with the image frame size.

(10) The image processing device according to (9), wherein the image selection unit performs adjustment of the widths of the regions of interest to obtain equally adjusted widths so that the size of the image generated by performing the combining substantially coincides with the image frame size.

(11) The image processing device according to (9), wherein the image selection unit performs adjustment of the widths of the regions of interest to obtain adjusted widths according to the regional width of the region of interest so that the size of the image generated by performing the combining substantially coincides with the image frame size.

(12) The image processing device according to (9), wherein, when the regional width of the region of interest is to be reduced, the image selection unit performs width adjustment based on the subject information so that more regions of interest of the desired moving subject are left, and when the regional width of the region of interest is to be enlarged, the image selection unit performs width adjustment so that more regions of interest of the desired moving subject are included therein.

(13) The image processing device according to (9), wherein, when the regional width of the region of interest is to be reduced, the image selection unit increases an adjustment width of a frame image as a frame interval with respect to a key frame of interest of each frame image is lengthened, and when the regional width of the region of interest is to be enlarged, the image selection unit increases an adjustment width of the frame image of the key frame of interest, or increases an adjustment width of the frame image as the frame interval with respect to the key frame of interest of each frame image is shortened.

(14) The image processing device according to (13), wherein the key frame of interest is a key frame instructed by a user or a key frame decided based on the subject information.

Industrial Applicability

According to the image processing device, the image processing method, and the program of the technology, the width of a combining target image to be combined with a combining-completed image is decided for each input frame according to subject information. In addition, the combining target image is combined so that the combining target image having the decided width of the input frame is parallel with the combining-completed image in a predetermined direction, and thereby a motion transition image indicating motion transition of a subject is generated. For this reason, without performing a manipulation of a user to instruct a region that includes the subject for each frame image or a process performed by the user to instruct a position in which images join, extraction and joining of the images can be automatically performed according to a state of the subject, and thereby a desired motion transition image can be easily generated. Thus, the technology can be applied to a video camera or a digital still camera, a mobile apparatus such as a mobile telephone or a tablet having an imaging function, a server in which image signals of a captured image are recorded or an editing device which processes image signals, a video reproduction device, a computer device, or the like.

Reference Signs List

10      system

21      image input unit

22      subject information generation unit

23      subject information input unit

30      image processing device

31      image selection unit

32      image combining unit

33      image output unit

34      combined image updating holding unit

41      output device

221     object detection section

222     moving subject detection section

311     key frame determination section

312     combining region setting section

313     combined frame amount computation section

314     width adjustment section

315     extraction processing section

321     layer separation section

322     layer processing section

323    layer combining section

**Claims**

1. An image processing device comprising:

   an image selection unit configured to decide a width of a combining target image to be combined with a combining-completed image for each input frame according to subject information; and
   an image combining unit configured to combine the combining target image having the decided width of the input frame with the combining target image to be parallel with the combining-completed image in a predetermined direction.

2. The image processing device according to claim 1, wherein the image selection unit decides a width of at least one of a moving subject layer and a background layer of the input frame according to the subject information.

3. The image processing device according to claim 2, wherein the image selection unit extracts a region of the moving subject layer of the input frame in which the subject information indicates a specific state as a region of interest, and decides the regional width of the region of interest as a width for combining the background layer of the input frame with the combining-completed image.

4. The image processing device according to claim 2, wherein the image selection unit decides a width for combining the moving subject layer of the input frame with the combining-completed image based on a width of a moving subject in the moving subject layer of the input frame.

5. The image processing device according to claim 3,
   wherein the moving subject is a human body, and
   wherein the image selection unit detects a desired portion of the human body using a human body detection mask, thereby deciding the regional width of the region of interest so that the desired portion is included therein.

6. The image processing device according to claim 3, wherein the image selection unit decides the regional width of the region of interest using a cumulative area mask so that a cumulative area of a portion of a moving subject has a predetermined ratio.

7. The image processing device according to claim 2, wherein the image selection unit decides the number of frames of an image to be combined according to an image frame size and an image size of an image that has undergone the combining.

8. The image processing device according to claim 7, wherein, when the image selection unit decides a key frame from the input frame and changes a number of frames of the image to be combined according to the image frame size and the image size of the image generated by combining the combining target image of the key frame, the image selection unit decides the key frame again according to the changed number of frames.

9. The image processing device according to claim 7, wherein, by setting a region of interest that includes a region of interest of a desired moving subject in the moving subject layer of the combining target image, the image selection unit adjusts the regional width of the region of interest so that a size of an image generated by performing the combining by joining a region of interest of the combining target image with a region of interest of an image finally combined in the combining-completed image substantially coincides with the image frame size.

10. The image processing device according to claim 9, wherein the image selection unit performs adjustment of the widths of the regions of interest to obtain equally adjusted widths so that the size of the image generated by performing the combining substantially coincides with the image frame size.

11. The image processing device according to claim 9, wherein the image selection unit performs adjustment of the widths of the regions of interest to obtain adjusted widths according to the regional width of the region of interest so that the size of the image generated by performing the combining substantially coincides with the image frame size.

12. The image processing device according to claim 9, wherein, when the regional width of the region of interest is to be reduced, the image selection unit performs width adjustment based on the subject information so that more regions of interest of the desired moving subject are left, and when the regional width of the region of interest is to be enlarged, the image selection unit performs width adjustment so that more regions of interest of the desired moving subject are included therein.

13. The image processing device according to claim 9, wherein, when the regional width of the region of interest is to be reduced, the image selection unit increases an adjustment width of a frame image as a frame interval with respect to a key frame of interest of each frame image is lengthened, and when the regional width of the region of interest is to be enlarged, the image selection unit increases an adjustment width of the frame image of the key frame of interest, or increases an adjustment width of the frame image as the frame interval with respect to the key frame of interest of each frame image is shortened.

14. The image processing device according to claim 13, wherein the key frame of interest is a key frame instructed by a user or a key frame decided based on the subject information.

15. An image processing method comprising:

   a step of deciding a width of a combining target image to be combined with a combining-completed image for each input frame according to subject information; and
   a step of combining the decided combining target image of the input frame with the combining target image to be parallel with the combining-completed image in a predetermined direction.

16. A program for causing a computer to generate an image indicating motion transition of a subject using an input frame, the program causing the computer to execute:

   a procedure of deciding a width of a combining target image to be combined with a combining-completed image for each input frame according to subject information; and
   a procedure of combining the decided combining target image of the input frame with the combining target image to be parallel with the combining-completed image in a predetermined direction.

**FIG. 1**

EP 2 819 398 A1

FIG. 2

## FIG. 3

START

ACCEPT FRAME IMAGE AND SUBJECT INFORMATION — ST1

IS ACCEPTANCE FINISHED ? — ST2

NO

YES

DETERMINE KEY FRAME — ST3

SET COMBINING REGION — ST4

COMPUTE NUMBER OF COMBINED FRAMES — ST5

IS NUMBER OF COMBINED FRAMES UNCHANGED ? — ST6

NO

YES

PERFORM WIDTH ADJUSTMENT — ST7

EXTRACT IMAGE — ST8

PERFORM LAYER SEPARATION PROCESS — ST9

PERFORM LAYER PROCESSING — ST10

PERFORM LAYER COMBINING PROCESS — ST11

HAS COMBINING BEEN COMPLETED FOR ALL FRAMES ? — ST12

NO

ST13

UPDATE COMBINING-COMPLETED IMAGE OF PREVIOUS TIME

YES

OUTPUT COMBINING-COMPLETED IMAGE — ST14

END

# FIG. 4

# FIG. 5

TIME →

(A)

(B)

(C)

(D)

Wa  Wa  Wa  Wa  Wa

Wb  Wb  Wb  Wb  Wb

EP 2 819 398 A1

# FIG. 6

TIME →

(A)

(B)

$(100-Na)\%$

$(Na/2)\%$  $(Na/2)\%$

(C)

(D)

Wa   Wa   Wa   Wa   Wa

Wb   Wb   Wb   Wb   Wb

EP 2 819 398 A1

# FIG. 7

（A）

MP

（B）

Wa

MP

（C）

Wa

# FIG. 8

Wa

（A）

Wa

（B）

# FIG. 9

(A)

0.7 FRAMES    0.3 FRAMES

1 FRAME

WG

0.3 FRAMES    0.6 FRAMES

(B)

1 FRAME    AS MANY AS 1.1 FRAMES

WG

1 FRAME    AS MANY AS 0.3 FRAMES

# FIG. 10

WG

（A）

Wb  Wb

（B）

WG

# FIG. 11

START

ACCEPT FRAME IMAGE AND SUBJECT INFORMATION — ST21

DETERMINE KEY FRAME — ST22

SET COMBINING REGION — ST23

EXTRACT IMAGE — ST24

PERFORM LAYER SEPARATION PROCESS — ST25

PERFORM LAYER PROCESSING — ST26

READ COMBINING-COMPLETED IMAGE OF PREVIOUS TIME — ST27

PERFORM LAYER COMBINING PROCESS — ST28

OUTPUT COMBINING-COMPLETED IMAGE — ST29

ST30
IS INPUT OF THIS TIME KEY FRAME ?
NO
YES

UPDATE COMBINING-COMPLETED IMAGE OF PREVIOUS TIME — ST31

ST32
HAS COMBINING BEEN COMPLETED FOR ALL FRAMES ?
NO
YES

END

# FIG. 12

(A)

(B)

(C)

(D)

(E)

# FIG. 13

(A)

(B)

(C)

# FIG. 14

( A )

BEFORE ADJUSTMENT

AFTER ADJUSTMENT

Wb

( B )

BEFORE ADJUSTMENT

AFTER ADJUSTMENT

Wb

# FIG. 15

## KEY FRAME IMAGE OF INTEREST

(A)

BEFORE ADJUSTMENT

AFTER ADJUSTMENT

## KEY FRAME IMAGE OF INTEREST

(B)

BEFORE ADJUSTMENT

AFTER ADJUSTMENT

EP 2 819 398 A1

FIG. 16

## INTERNATIONAL SEARCH REPORT

International application No.

PCT/JP2013/051141

### A. CLASSIFICATION OF SUBJECT MATTER

*H04N5/265*(2006.01)i, *H04N5/232*(2006.01)i

According to International Patent Classification (IPC) or to both national classification and IPC

### B. FIELDS SEARCHED

Minimum documentation searched (classification system followed by classification symbols)
H04N5/265, H04N5/232

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2010-45727 A (Sony Corp.),<br>25 February 2010 (25.02.2010),<br>paragraphs [0040] to [0042]; fig. 6, 7<br>& US 2010/0039447 A1 & EP 2157549 A2<br>& CN 101655991 A & KR 10-2010-0021982 A | 1,2,15,16<br>3-14 |
| A | JP 2010-166545 A (Casio Computer Co., Ltd.),<br>29 July 2010 (29.07.2010),<br>paragraphs [0123] to [0125]; fig. 16<br>& US 2010/0157085 A1 & CN 101783877 A | 1-16 |
| A | JP 2004-180259 A (Toshiba Corp.),<br>24 June 2004 (24.06.2004),<br>paragraph [0021]; fig. 5<br>& US 2004/0125115 A1 | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>11 March, 2013 (11.03.13) | Date of mailing of the international search report<br>09 April, 2013 (09.04.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/051141 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-56359 A  (Fuji Photo Film Co., Ltd.), 19 February 2004 (19.02.2004), paragraphs [0031] to [0037]; fig. 4, 5 (Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011030244 A

- US 20100039447 A